# EUROPÄISCHE PATENTANMELDUNG

(11) **EP 4 606 832 A1**
(43) Veröffentlichungstag der Anmeldung: **27.08.2025**
(21) Anmeldenummer: 25157684.9
(22) Anmeldetag: 13.02.2025
(51) Int. Cl.: C08G 18/18, C08G 18/48, C08G 18/76, C08L 75/08, C08G 18/09

(54) **STABILISATOREN FÜR POLYURETHANSCHAUMSTOFFE ENTHALTEND RECYCLING-POLYOL**

(30) Priorität: 22.02.2024 EP 24159158
(71) Anmelder: Evonik Operations GmbH, 45128 Essen (DE)
(72) Erfinder: Suchan, Michael, 45894 Gelsenkirchen (DE); Otto, Sarah, 45128 Essen (DE); Ferenz, Michael, 45147 Essen (DE)
(74) Vertreter: Evonik Patent Association

(57) **Zusammenfassung**

Die Erfindung betrifft eine Zusammensetzung zur Herstellung von Polyurethanschaumstoff, umfassend eine Polyol-Komponente, umfassend mindestens ein Recycling-Polyol, eine Polyisocyanat-Komponente, mindestens einen Katalysator, mindestens ein Treibmittel, wobei die Polyol-Komponente mindestens ein Recycling-Polyol umfasst, und wobei die Zusammensetzung zusätzlich mindestens ein Acrylat- und/oder Methacrylat-Copolymer als Schaumstabilisator enthält, wobei das mindestens eine Acrylat- und/oder Methacrylat-Copolymer in einer Gesamtmenge von 0,1 bis 20 Gewichtsteile, vorzugsweise 0,5 bis 10 Gewichtsteile, besonders bevorzugt 0,5 bis 8 Gewichtsteile bezogen auf 100 Gewichtsteile der gesamten Polyol-Komponente, enthalten ist.

## Beschreibung

Die vorliegende Erfindung liegt auf dem Gebiet der Polyurethane. Insbesondere betrifft sie eine Zusammensetzung zur Herstellung von Polyurethanschaumstoff, ein Verfahren zur Herstellung von Polyurethanschaumstoff, sowie den Polyurethanschaumstoff hergestellt nach dem Verfahren und dessen Verwendung.

Die Begriffe des Polyurethans und des Polyurethanschaumstoffes sind feststehende technische Begriffe und dem Fachmann lange bekannt. Unter Polyurethan (PU) wird im Rahmen der vorliegenden Erfindung insbesondere ein Produkt verstanden, erhältlich durch Reaktion einer Polyisocyanat-Komponente mit einer Polyol-Komponente. Es können hierbei neben dem Polyurethan auch weitere funktionelle Gruppen, wie z.B. Uretdione, Carbodiimide, Isocyanurate, Allophanate, Biurete, Harnstoffe und/oder Uretimine, gebildet werden. Daher werden unter Polyurethan (PU) im Sinne der vorliegenden Erfindung sowohl Polyurethane als auch Polyisocyanurate, Polyharnstoffe sowie Uretdion-, Carbodiimid-, Allophanat-, Biuret- und/oder Uretimin-Gruppen enthaltende Polyisocyanat-Reaktionsprodukte verstanden. Die Bezeichnung Polyurethan ist demnach als Oberbegriff für ein aus Polyisocyanaten und Polyolen oder anderen gegenüber Isocyanat reaktiven Spezies, wie z.B. Aminen, hergestelltes Polymer zu verstehen, wobei die Urethan-Bindung nicht ausschließlicher oder überwiegender Bindungstyp sein muss. Insbesondere Polyisocyanurate und Polyharnstoffe sind ausdrücklich mit eingeschlossen. Dementsprechend wird unter Polyurethanschaumstoff (PU-Schaumstoff) im Rahmen der vorliegenden Erfindung ein Schaumstoff verstanden, der als Reaktionsprodukt einer Polyisocyanat-Komponente und einer Polyol-Komponente erhalten wird. Es können auch hierbei neben dem Namen gebenden Polyurethan weitere funktionelle Gruppen, wie z.B. Allophanate, Biurete, Harnstoffe, Carbodiimide, Uretdione, Isocyanurate oder Uretimine, gebildet werden.

Schaumstoffe sowie PU-Schaumstoffe sind an sich bekannt. PU-Hartschaumstoff ist ein feststehender technischer Begriff. Der bekannte und prinzipielle Unterschied zwischen Weich- und Hartschaumstoff ist, dass ein Weichschaumstoff ein elastisches Verhalten zeigt und demzufolge die Verformung reversibel ist. Hartschaumstoff wird demgegenüber dauerhaft verformt. Weiteres zu Polyurethan-Hartschaumstoffen findet man z.B. auch im "Kunststoffhandbuch, Band 7, Polyurethane", Carl Hanser Verlag, 3. Auflage 1993, Kapitel 6 beschrieben.

Bei der Herstellung von Polyurethan-Schaumstoffen, insbesondere entsprechenden Hartschaumstoffen, können gewöhnlich zellstabilisierende bzw. schaumstabilisierende Additive (sogenannte Schaumstabilisatoren) eingesetzt werden, welche für eine feinzellige, gleichmäßige und störungsarme Schaumstruktur sorgen sollen und damit die Gebrauchseigenschaften, so zum Beispiel das thermische Isolationsvermögen des Hartschaumstoffes, in wesentlichem Maße positiv beeinflussen sollen. Besonders effektiv sind dabei Tenside auf Basis von Polyether-modifizierten Siloxanen, welche daher den bevorzugten Typ der Schaumstabilisatoren darstellen. Diese sogenannten Polyethersiloxan-Schaumstabilisatoren (PES) sind aus dem Stand der Technik hinreichend bekannt und zum Beispiel in CN 103665385 A, CN 103657518 A, CN 103055759 A, CN 103044687 A, US 2008/0125503 A1, US 2015/0057384 A1, EP 1520870 A1, EP 1211279 A1, EP 0867464 A1, EP 0867465 A1 sowie in EP 0275563 A1 ausführlich beschrieben.

EP 3957669 A1 beschreibt Schaumstabilisatoren auf Basis von Methacrylaten in herkömmlichen Polyurethanhartschaumformulierungen ohne Recycling-Polyole, welcher zu vergleichbaren Eigenschaften, wie die mit Polyether-modifizierten Siloxanen hergestellten Schäume führen.

Im Zusammenhang mit der Bereitstellung von PU-Schaumstoffen, insbesondere PU-Hartschaumstoffen, ist es ein besonders wichtiges Anliegen, diese aus besonders nachhaltigen Materialien herzustellen und einen Beitrag zu einer funktionierenden Kreislaufwirtschaft im Bereich der Polyurethanschaumstoffe zu liefern. Dies kann z.B. durch den Einsatz von Recycling-Polyolen, welche vorzugsweise durch chemisches Recycling, d.h. Depolymerisation von Polyurethan, insbesondere Polyurethanschaumstoff und besonders bevorzugt Polyurethanhartschaumstoff, erhalten werden, geschehen. Möglichkeiten zur Herstellung solcher Recycling-Polyole sind bekannt und unter anderem ausführlich zum Beispiel in WO 2018/091575 A1, CN 114106281 A, US 3441616, EP 0105167 A1, DD 226575 A1, US 5274004, DE 4217024 A1, DE 4234335 A1, DE 4442379 A1, EP 718349 A1, DE 19510638A1, DE 19622761 A1, US 5763692, WO 2022063764 A1, WO 20150 27319 A1, CN 105399985 A, WO 2020080619 A1, WO 2019219814 A1, WO 2021023889 A1 sowie in WO 2022135987 A1 beschrieben. Dabei können unter anderem Verfahren wie z.B. Glykolyse, Alkoholyse, Acidolyse, Aminolyse, Hydrolyse, oder Solvolyse angewandt werden.

Recycling-Polyole können vorzugsweise aus Produktionsabfällen, die während der Polyurethanschaumherstellung erhalten werden, wie zum Beispiel Schnittresten, Sägeabfall oder Material, welches die Qualitätskontrolle nicht besteht, hergestellt werden, aber z.B. auch aus Polyurethanschaumabfällen, sogenannten Abfallschaumstoffen, die das Ende ihrer Lebensdauer erreicht haben, wie zum Beispiel Schaumstoffe aus gebrauchten Kühlgeräten, gebrauchten Dämmmaterialien bzw. Dämmplatten, gebrauchten Dichtschäumen, gebrauchten Matratzen, gebrauchten Möbeln, gebrauchten Schallabsorptionsmaterialien, gebrauchten Verpackungsschäumen oder gebrauchte Fahrzeugen.

Der Einsatz von hohen Anteilen solcher Recycling-Polyole führt bisher allerdings häufig zu einer Verschlechterung der Schaumqualität und begrenzt daher in der Regel die Einsatzmenge der Recycling-Polyole im Polyurethanschaum deutlich, insbesondere beim herkömmlichen Einsatz der bisher üblicherweise verwendeten Polyether-modifizierten Siloxanen.

Es besteht daher weiterhin ein Bedarf an der Bereitstellung von PU-Schaumstoff, vorzugsweise PU-Hartschaumstoff, wobei es ermöglicht sein soll, auch höhere Anteile an Recycling-Polyolen einzusetzen und wobei vergleichbare oder sogar bessere Schaumqualitäten resultieren, insbesondere mit Blick auf eine geringe Wärmeleitfähigkeit und/oder gute Oberflächenqualität, wie bei Einsatz klassischer Polyethersiloxane. Die Bereitstellung entsprechender Polyurethanschaumstoffe ist daher die Aufgabe der Erfindung.

Im Rahmen der vorliegenden Erfindung konnte überraschend gefunden werden, dass dies durch den erfindungsgemäßen Einsatz von mindestens einem Acrylat- und/oder Methacrylat-Copolymer als Schaumstabilisator, bevorzugt wie in Anspruch 1 angegeben, ermöglicht werden kann.

Die Aufgabe wird gelöst vom Gegenstand der Erfindung. Der Gegenstand der Erfindung ist eine Zusammensetzung zur Herstellung von Polyurethanschaumstoff, vorzugsweise Polyurethanhartschaumstoff, umfassend
- eine Polyol-Komponente, umfassend mindestens ein Recycling-Polyol,
- eine Polyisocyanat-Komponente,
- mindestens einen Katalysator, der die Reaktionen Isocyanat-Polyol und/oder Isocyanat-Wasser und/oder die Isocyanat-Trimerisierung katalysiert,
- mindestens ein Treibmittel,
wobei die Zusammensetzung zusätzlich mindestens ein Acrylat- und/oder Methacrylat-Copolymer als Schaumstabilisator enthält, wobei das mindestens eine Acrylat- und/oder Methacrylat-Copolymer in einer Gesamtmenge von 0,1 bis 20 Gewichtsteile, vorzugsweise 0,5 bis 10 Gewichtsteile, besonders bevorzugt 0,5 bis 8 Gewichtsteile bezogen auf 100 Gewichtsteile der gesamten Polyol-Komponente, enthalten ist.

Der erfindungsgemäße Gegenstand geht mit vielfältigen Vorteilen einher. Der erfindungsgemäße Gegenstand ermöglicht die Bereitstellung von PU-Schaumstoff, vorzugsweise PU-Hartschaumstoff, auch unter Einsatz höherer Anteile an Recycling-Polyolen, wobei vergleichbare Schaumqualitäten resultieren, insbesondere mit Blick auf eine geringe Wärmeleitfähigkeit und/oder gute Oberflächenqualität, wie bei Einsatz klassischer Polyethersiloxane. Er ermöglicht die Bereitstellung von PU-Schaumstoffen, welche die bekannten Anforderungen erfüllen und höhere Anteile an Recycling-Polyolen enthalten. Die PU-Schaumstoffe sind vorteilhafterweise dimensionsstabil, verfügen über sehr gute Isolationseigenschaften und weisen eine hohe Oberflächenqualität auf. Vorteilhafterweise wird dies ermöglicht, ohne die sonstigen Eigenschaften des Materials zu beeinträchtigen. Es werden überdies besonders feinzellige, gleichmäßige und störungsarme Schaumstrukturen ermöglicht.

Die erfindungsgemäße Zusammensetzung enthält mindestens ein Treibmittel. Es ist bevorzugt, dass das mindestens eine Treibmittel ausgewählt ist aus der Gruppe bestehend aus
- Kohlenwasserstoffen mit 3, 4 oder 5 Kohlenstoff-Atomen, bevorzugt cyclo-, iso- und/oder n-Pentan,
- Hydrofluoroolefine und/oder Hydrohaloolefine, bevorzugt 1234ze, 1234yf, 1224yd, 1233zd(E) und/oder 1336mzz,
   und
- sauerstoffhaltige Treibmittel, bevorzugt Ameisensäuremethylester, Aceton und/oder Dimethoxymethan.

Die erfindungsgemäße Zusammensetzung enthält mindestens ein Acrylat- und/oder Methacrylat-Copolymer. Es ist bevorzugt, dass das mindestens eine Acrylat- und/oder Methacrylat-Copolymer mindestens ein Co-Monomer des Typs H₂C=CR¹-COOR² und mindestens ein Co-Monomer des Typs H₂C=CR¹-COOR³, enthält, wobei
- R¹ =: jeweils unabhängig voneinander H oder Methyl, wobei innerhalb eines Moleküls verschiedene Co-Monomere mit untereinander verschiedenen Substituenten R¹ vorliegen können,
- R² =: jeweils unabhängig voneinander ein Rest aus der Gruppe aliphatischer oder aromatischer Kohlenwasserstoffe mit 1 bis 25 C-Atomen, vorzugsweise Methyl, Ethyl, n-Butyl, i-Butyl, t-Butyl, 2-Ethylhexyl, Isodecyl, Cyclohexyl, Benzyl, Phenyl, Isobornyl oder Allyl, wobei innerhalb eines Moleküls verschiedene Co-Monomere mit untereinander verschiedenen Substituenten R² vorliegen können,
- R³ =: jeweils unabhängig voneinander ein Polyether-Rest nach Formel 1, wobei innerhalb eines Moleküls verschiedene Co-Monomere mit untereinander verschiedenen Substituenten R³ vorliegen können, 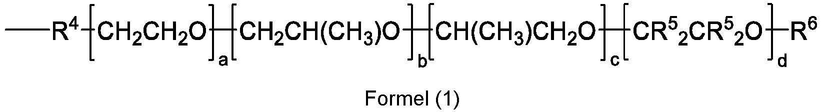
- mit R⁴ =: jeweils unabhängig voneinander -CH₂-O-, -CH₂-CH₂-O-, -CH₂-CH₂-CH₂-O-, -CH₂-CH₂-CH₂-CH₂-O- oder -CH₂-CH₂- CH₂-CH₂-CH₂-O-, wobei R⁴ auch entfallen kann,
- R⁵ =: jeweils unabhängig voneinander gleiche oder verschiedene Alkylreste mit 1 bis 18 Kohlenstoffatomen, die optional Etherfunktionen besitzen, oder gleiche oder verschiedene Arylreste mit 6 bis 18 Kohlenstoffatomen, die optional Etherfunktionen besitzen, oder H, bevorzugt H, Methyl, Ethyl oder Benzyl,
- R⁶ =: jeweils unabhängig voneinander gleiche oder verschiedene Reste ausgewählt aus der Gruppe bestehend aus R⁷, -C(O)R⁷, -CH₂-CH(OH)-CH₂OH und -CH₂-C(CH₂OH)₂-CH₂-CH₃, wobei H, Methyl, Ethyl, Propyl, Butyl und/oder C(O)Me besonders bevorzugt sind,
- R⁷ =: jeweils unabhängig voneinander gleiche oder verschiedene aliphatische Kohlenwasserstoffe mit 1 bis 25 Kohlenstoffatomen, gleiche oder verschiedene Arylreste mit 6 bis 16 Kohlenstoffatomen oder H,
- a =: 0 bis 300, bevorzugt 0 bis 100, besonders bevorzugt 0 bis 80,
- b =: 0 bis 300, bevorzugt 0 bis 100, besonders bevorzugt 0 bis 80,
- c =: 0 bis 300, bevorzugt 0 bis 100, besonders bevorzugt 0 bis 80,
- d =: 0 bis 300, bevorzugt 0 bis 100, besonders bevorzugt 0,
wobei a+b+c+d = 2 bis 500, vorzugsweise > 5 bis 300, besonders bevorzugt 8 bis 100.

Es ist bevorzugt, dass das mindestens eine Acrylat- und/oder Methacrylat-Copolymer ein mittels Gelpermeationschromatographie nach DIN 55672-1:2016-03 (Eluent: Tetrahydrofuran (THF); Standard: Polystyrol (PS)) ermitteltes gewichtsgemitteltes Molekulargewicht M_{w} im Bereich von 500 bis 100.000 g/mol, besonders bevorzugt 1.000 bis 20.000 g /mol, ganz besonders bevorzugt 1.000 bis 15.000 g/mol aufweist.

Die erfindungsgemäße Zusammensetzung enthält mindestens ein Recycling-Polyol. Es ist bevorzugt, dass das mindestens eine Recycling-Polyol in einer Gesamtmenge von mindestens 10 Gewichtsteilen, vorzugsweise mehr als 20 Gewichtsteilen, besonders bevorzugt mehr als 30 Gewichtsteilen, bezogen auf 100 Gewichtsteile der gesamten Polyol-Komponente eingesetzt wird.

Das mindestens eine Recycling-Polyol ist vorzugsweise ausgewählt aus der Gruppe bestehend aus Recycling-Polyether-Polyol und Recycling-Polyester-Polyol. Polyether-Polyole und Polyester-Polyole sind dem Fachmann wohlbekannt und deren bekannte Umsetzung mit Polyisocyanaten ermöglicht die bestens erprobte Herstellung von Polyurethanen.

Vorzugsweise kann das mindestens eine Recycling-Polyol solches sein, welches durch Depolymerisation von Polyurethan, bevorzugt Depolymerisation von Polyurethan durch Hydrolyse, Solvolyse, Aminolyse, Acidolyse, Alkoholyse oder Glykolyse, besonders bevorzugt Glykolyse, Hydrolyse, oder Aminolyse, ganz besonders bevorzugt Glykolyse erhalten wurde, wobei vorzugsweise auch verschiedene Recycling-Polyole aus unterschiedlichen Depolymerisationsverfahren eingesetzt werden können.

Es ist bevorzugt, dass das mindestens eine Recycling-Polyol durch Depolymerisation von Polyurethan-Schaumstoff, bevorzugt Polyurethan-Hartschaumstoff, besonders bevorzugt Polyether- und/oder Polyester-Polyol enthaltenden Polyurethan-Schaumstoff, weiter bevorzugt Polyether- und/oder Polyester-Polyol enthaltenden Polyurethan-Hartschaumstoff, vorzugsweise nach einem in Anspruch 6 genannten Verfahren, besonders bevorzugt Glykolyse, erhalten wurde.

Insbesondere ist es bevorzugt, wenn das eingesetzte Recycling-Polyol aus einem PU-Abfallschaumstoff erhalten wurde.

Ein PU-Abfallschaumstoff ist ein PU-Schaumstoff, welcher vorzugsweise
(i) aus Produktionsabfällen resultiert, die während der Polyurethanschaumherstellung erhalten werden, wie zum Beispiel Schnittresten, Sägeabfall oder Material, welches die Qualitätskontrolle nicht besteht,
   und/oder
(ii) aus PU-Schaumstoffen resultiert, die das Ende ihrer Lebensdauer erreicht haben, wie zum Beispiel Schaumstoffen aus gebrauchten Kühlgeräten, gebrauchte Dämmmaterialien bzw. Dämmplatten, gebrauchte Dichtschäume, gebrauchte Matratzen, gebrauchte Möbel, gebrauchte Schallabsorptionsmaterialien, gebrauchte Verpackungsschäume oder Schaumstoffe aus gebrauchten Fahrzeugen.

Acrylat- und/oder Methacrylat-Copolymere und deren Herstellung sind aus dem Stand der Technik bereits bekannt und beispielsweise in EP 1070730 A2 oder US 2014/0045993 A1 beschrieben. Der Zugang zu den erfindungsgemäß einsetzbaren Schaumstabilisatoren, vorzugsweise wie in einem der Patentansprüche charakterisiert, kann auf den üblichen, dem Fachmann bekannten Wegen erfolgen, beispielsweise durch radikalische Polymerisation von Acrylaten und/oder Methacrylaten. Im experimentellen Teil wird dies exemplarisch an mehreren Beispielen demonstriert.

Im Sinne der Erfindung einsetzbare Acrylat- und/oder Methacrylat-Monomere sind z.B. auch kommerziell erhältlich, beispielsweise unter dem Markennamen VISIOMER^{®} von der Firma Evonik Operations GmbH.

Beispiele hierfür, jedoch nicht darauf eingeschränkt, sind vorzugsweise Methyl(meth)acrylat, Ethyl(meth)acrylat, Propyl(meth)acrylat, Isopropyl(meth)acrylat, Butyl(meth)acrylat, Isobutyl-(meth)acrylat, Hexyl(meth)acrylat, Ethylhexyl(meth)acrylat, Isodecyl(meth)acrylat, Cyclohexyl-(meth)acrylat, Tetrahydrofurfuryl(meth)acrylat, Isobornyl(meth)acrylat, Benzyl(meth)acrylat, Phenyl-(meth)acrylat, Phenylethyl(meth)acrylat), 3,3,5-Trimethylcyclohexyl(meth)acrylat, Hydroxyalkyl-(meth)acrylate, wie z.B. 3-Hydroxypropylmethacrylat, 3,4-Dihydroxybutylmethacrylat, 2-Hydroxyethylmethacrylat, 2-Hydroxypropylmethacrylat, 2,5-Dimethyl-1,6-hexandiol(meth)acrylat, 1,10-Decandiol(meth)acrylat, Glycoldimethacrylate, wie z.B. 1,4-Butandiolmethacrylat, 2-Butoxyethylmethacrylat, 2-Ethoxyethoxymethylmethacrylat, 2-Ethoxyethylmethacrylat, Methacrylate von Etheralkoholen, wie z.B. Tetrahydrofurfurylmethacrylat, Vinyloxyethoxyethylmethacrylat, Methoxyethoxyethylmethacrylat, 1-Butoxypropylmethacrylat, 1-Methyl-(2-vinyloxy)ethylmethacrylat, Cyclohexyloxymethylmethacrylat, Methoxymethoxyethylmethacrylat, Benzyloxymethylmethacrylat, Furfurylmethacrylat, 2-Butoxyethylmethacrylat, 2-Ethoxyethoxymethylmethacrylat, 2-Ethoxyethylmethacrylat, Allyloxymethylmethacrylat, 1-Ethoxybutylmethacrylat, Methoxymethylmethacrylat, -Ethoxyethylmethacrylat, Ethoxymethylmethacrylat und/oder ethoxylierte oder propoxylierte (Meth)acrylate, die bevorzugt 1 bis 20, insbesondere 2 bis 8 Ethoxygruppen oder Propoxygruppen aufweisen.

Besonders bevorzugte Beispiele für im Sinne der Erfindung einsetzbare Acrylat- und/oder Methacrylat-Monomere, jedoch nicht darauf eingeschränkt, sind insbesondere Methyl(meth)acrylat, Ethyl(meth)acrylat, Propyl(meth)acrylat, Isopropyl(meth)acrylat, Butyl(meth)acrylat, Isobutyl-(meth)acrylat, Hexyl(meth)acrylat, Ethylhexyl(meth)acrylat, Isodecyl(meth)acrylat, Cyclohexyl-(meth)acrylat, Isobornyl(meth)acrylat, Benzyl(meth)acrylat, Phenyl(meth)acrylat, Phenylethyl-(meth)acrylat), 3,3,5-Trimethylcyclohexyl(meth)acrylat, 2-Butoxyethylmethacrylat, 2-Ethoxyethoxymethylmethacrylat, 2-Ethoxyethylmethacrylat, Methacrylate von Etheralkoholen, wie z.B. Methoxyethoxyethylmethacrylat, 1-Butoxypropylmethacrylat, Methoxymethoxyethylmethacrylat, 2-Butoxyethylmethacrylat, 2-Ethoxyethoxymethylmethacrylat, 2-Ethoxyethylmethacrylat, 1-Ethoxybutylmethacrylat, Methoxymethylmethacrylat, 1-Ethoxyethylmethacrylat, Ethoxymethylmethacrylat und/oder ethoxylierte oder propoxylierte (Meth)acrylate, die bevorzugt 1 bis 20, insbesondere 2 bis 8 Ethoxygruppen oder Propoxygruppen aufweisen.

Die Schreibweise (Meth)acrylat bedeutet hier sowohl Methacrylat, wie z.B. Methylmethacrylat, Ethylmethacrylat usw., als auch Acrylat, wie z.B. Methylacrylat, Ethylacrylat usw., sowie Mischungen aus beiden.

Als mögliche Initiatoren für die radikalische Polymerisation von Acrylaten und/oder Methacrylaten können z.B. unter den Polymerisationsbedingungen in Radikale zerfallende Verbindungen eingesetzt werden, beispielsweise Peroxide, Hydroperoxide, Wasserstoffperoxid, Persulfate, Azoverbindungen und/oder die sogenannten Redoxinitiatoren. In manchen Fällen kann es auch vorteilhaft sein, Mischungen verschiedener Initiatoren zu verwenden, beispielsweise Mischungen aus Wasserstoffperoxid und Natrium- oder Kaliumperoxodisulfat. Bevorzugt einsetzbare Initiatoren sind z.B. organische Peroxide, wie beispielsweise Acetylacetonperoxid, Methylethylketonperoxid, tert.-Butylhydroperoxid, Cumolhydroperoxid, tert.-Amylperpivalat, tert.-Butylperpivalat, tert.-Butylperneo-hexanoat, tert.-Butylperisobutyrat, tert.-Butyl-peroxy-2-ethylhexanoat, tert.-Butylperisononanoat, tert.-Butylpermaleat, tert.-Butylperbenzoat, Di-(2-ethylhexyl)peroxydicarbonat, Dicyclohexylperoxydicarbonat, Di-(4-tert.-butylcyclohexyl)peroxydicarbonat, Dimyristilperoxydicarbonat, Diacetylperoxydicarbonat, Allylperester, Cumylperoxyneodecanoat, tert.-Butyl-per-3,5,5-trimethylhexanoat, Acetylcyclohexylsulfonylperoxid, Dilaurylperoxid, und/oder tert.-Amyl-peroxy-2-ethylhexanoat. Weitere mögliche Initiatoren sind beispielsweise Azoverbindungen, z.B. 2,2'-Azobisisobutyronitril, 2,2'-Azobis(2,4-dimethylvaleronitril) und 2,2'-Azobis(4-methoxy-2,4-dimethylvaleronitril).

Werden erfindungsgemäße Acrylat- und/oder Methacrylat-Copolymere mit tert.-Butyl-peroxy-2-ethyl-hexanoat (TBPEH) oder tert-Amyl-peroxy-2-ethylhexanoat (APO) oder einer Kombination aus TBPEH und APO als Initiator hergestellt, so können mit Blick auf die erfindungsgemäß angestrebten Resultate noch bessere Ergebnisse erzielt werden.

Es ist daher bevorzugt, dass dass mindestens eine Acrylat- und/oder Methacrylat-Copolymer mit TBPEH (tert.-Butyl-peroxy-2-ethylhexanoat) und/oder APO (tert-Amyl-peroxy-2-ethylhexanoat) als Initiator hergestellt wurde.

Weiterhin ist es bevorzugt, wenn der Restmonomergehalt <1 Gew.-% bezogen auf das insgesamt in der erfindungsgemäßen Zusammensetzung enthaltene mindestens eine Acrylat- und/oder Methacrylat-Copolymer beträgt. Der Restmonomergehalt kann über übliche Methoden bestimmt werden, insbesondere kann er über den Feststoffgehalt oder mittels GC oder HPLC bestimmt werden. Entsprechende Zusammensetzungen ermöglichen erfindungsgemäß besonders vorteilhafte Schaumstoffe, die darüber hinaus noch besonders emissionsarm sind.

Die erfindungsgemäße Zusammensetzung enthält mindestens einen Katalysator. Geeignete Katalysatoren die bei der Herstellung von Polyurethanschaumstoff einsetzbar sind, sind dem Fachmann aus dem Stand der Technik bekannt. Geeignete Katalysatoren können die Reaktionen Isocyanat-Polyol und/oder Isocyanat-Wasser und/oder die Isocyanat-Trimerisierung katalysieren.

Es ist bevorzugt, dass die erfindungsgemäße Zusammensetzung mindestens ein Zinn-haltiger Katalysator enthält, vorzugsweise in einer Gesamtmenge von weniger als 0,5 Gewichtsteile, bevorzugt weniger als 0,1 Gewichtsteile, besonders bevorzugt weniger als 0,01 Gewichtsteile, insbesondere bevorzugt von 0,0001 Gewichtsteile bis weniger als 0,01 Gewichtsteile, bezogen auf 100 Gewichtsteile der gesamten Polyol-Komponente In einer dazu alternativen, besonders bevorzugten Ausführungsform der Erfindung enthält die erfindungsgemäße Zusammensetzung keine Zinn-haltigen Katalysatoren.

Eine bevorzugte PU-Schaumformulierung, insbesondere PU-Hartschaumformulierung, im Sinne dieser Erfindung hat die in Tabelle 1 genannte Zusammensetzung.

**Tabelle 1: Zusammensetzung einer bevorzugten PU-Schaumformulierung**

| **Komponente** | **Gewichtsteile** |
|---|---|
| Polyol, enthaltend mindestens ein Recycling-Polyol | 80 bis 120 |
| Amin-Katalysator | > 0 bis 10 |
| Metall-Katalysator | 0 bis 10 |
| Schaumstabilisator nach Formel 1 | 0,1 bis 20 |
| Treibmittel | >0 bis 40 |
| Weitere Additive (Flammschutzmittel etc.) | 0 bis 300 |
| | |
| Isocyanat-Index: | 10 bis 1000 |

Ein weiterer Gegenstand der vorliegenden Erfindung ist ein Verfahren zur Herstellung von PU-Schaumstoff, vorzugsweise Polyurethanhartschaumstoff, unter Umsetzung einer Polyisocyanat-Komponente mit einer Polyol-Komponente, umfassend mindestens ein Recycling-Polyol, in Gegenwart von mindestens einem Katalysator und mindestens einem Treibmittel,
wobei zusätzlich mindestens ein Acrylat- und/oder Methacrylat-Copolymer als Schaumstabilisator eingesetzt wird, wobei das mindestens eine Acrylat- und/oder Methacrylat-Copolymer in einer Gesamtmenge von 0,1 bis 20 Gewichtsteile, vorzugsweise 0,5 bis 10 Gewichtsteile, besonders bevorzugt 0,5 bis 8 Gewichtsteile bezogen auf 100 Gewichtsteile der gesamten Polyol-Komponente, eingesetzt wird. Dabei ist es besonders bevorzugt, dass das Verfahren unter Einsatz einer Zusammensetzung nach einem der Ansprüche 1 bis 12 erfolgt.

Das erfindungsgemäße Verfahren zur Herstellung von PU-Schaumstoff, vorzugsweise Polyurethanhartschaumstoff, kann vorzugweise nach allen bekannten Methoden durchgeführt werden, z.B. im Handmischverfahren oder bevorzugt mit Hilfe von Verschäumungsmaschinen. Wird das Verfahren z.B. mittels Verschäumungsmaschinen durchgeführt, können Hochdruck- oder Niederdruckmaschinen verwendet werden. Beispielsweise kann das erfindungsgemäße Verfahren sowohl diskontinuierlich als auch kontinuierlich durchgeführt werden und es können z.B. 1K, 1.5K oder 2K Systeme, wie z.B. in EP 3717538 A1, US 2007/0197672 A1, EP 1400547 A1 oder WO 2013/072380 A2 beschrieben, verwendet werden.

Für weitere bevorzugte Ausführungsformen des erfindungsgemäßen Verfahrens sei außerdem auf die zuvor bereits im Zusammenhang mit der erfindungsgemäßen Zusammensetzung gemachten Ausführungen verwiesen.

Ein weiterer Gegenstand der vorliegenden Erfindung ist ein PU-Schaumstoff, insbesondere ein PU-Hartschaumstoff, hergestellt gemäß des zuvor genannten erfindungsgemäßen Verfahrens, besonders bevorzugt unter Einsatz einer erfindungsgemäßen Zusammensetzung.

Es ist bevorzugt, wenn der erfindungsgemäße PU-Schaumstoff, insbesondere PU-Hartschaumstoff, ein Raumgewicht von 5 bis 900 kg/m³, besonders bevorzugt 5 bis 350 kg/m³, ganz besonders bevrozugt 8 bis 200 kg/m³ aufweist.

Ein weiterer Gegenstand der vorliegenden Erfindung betrifft die Verwendung von erfindungsgemäßem PU-Schaumstoff, insbesondere PU-Hartschaumstoff, als Dämmstoff und/oder als Konstruktionswerkstoff, bevorzugt in Bauanwendungen, insbesondere im Sprühschaum, und/oder 1- & 1,5-Komponenten-Dosenschaum oder im Kühlbereich, als Schallabsorptionsmaterial, als Verpackungsschaum, als Holzimitat, als Modellschaum, als Dachhimmel für Automobile, als Automobil-Innenverkleidung, als Dichtschaum oder Rohrummantelungen für Röhren.

Eine besonders bevorzugte erfindungsgemäße Zusammensetzung enthält die folgenden Bestandteile:
- Polyol-Komponente, umfassend mindestens ein Recycling-Polyol,
- Polyisocyanat-Komponente,
- mindestens ein Katalysator, der die Reaktionen Isocyanat-Polyol und/oder Isocyanat-Wasser und/oder die Isocyanat-Trimerisierung katalysiert,
- mindestens ein Acrylat- und/oder Methacrylat-Copolymer als Schaumstabilisator,
- mindestens ein Treibmittel,
- optional weitere Additive, vorzugsweise Füllstoffe, flüssige Flammschutzmittel, etc.

Die Polyol-Komponente besteht aus mindestens einem Polyol und optional mindestens einer organischen Verbindung, welche mindestens zwei gegenüber Isocyanat reaktive Gruppen, vorzugsweise ausgewählt aus der Gruppe bestehend aus OH-, NH- und NH₂-Gruppen, enthält. Polyole sind organische Verbindungen, die mindestens zwei Hydroxylgruppen (-OH) enthalten.

Enthält eine der vorgenannten organischen Verbindungen der Polyol-Komponente mindestens zwei OH-Gruppen, dann wird diese im Sinne der Erfindung ausschließlich den Polyolen zugerechnet. Das heißt, wenn eine organische Verbindung der Polyol-Komponente sowohl als Polyol als auch als organische Verbindung, welche mindestens zwei gegenüber Isocyanat reaktive Gruppen, vorzugsweise ausgewählt aus der Gruppe bestehend aus OH-, NH- und NH₂-Gruppen, enthält, gewertet werden kann, so wird sie im Sinne der Erfindung ausschließlich den Polyolen zugerechnet. Bezogen auf ihr Gesamtgewicht enthält die Polyol-Komponente bevorzugt mindestens 50 Gew.-% solcher Polyole, welche nur Hydroxylgruppen (-OH) als gegenüber Isocyanat reaktive Gruppen enthalten.

Bezogen auf die Gesamtanzahl der gegenüber Isocyanat reaktiven Gruppen der Polyol-Komponente ist es bevorzugt, dass diese zu mindestens 50% Hydroxylgruppen (-OH) sind.

Entsprechende Verbindungen, die üblicherweise bei der Herstellung von PU eingesetzt werden können, sind dem Fachmann bekannt und beispielsweise beschrieben im "Kunststoffhandbuch, Band 7, Polyurethane", Carl Hanser Verlag, 3. Auflage 1993, Kapitel 3.1. Üblicherweise kommen Verbindungen mit OH-Zahlen im Bereich von 10 bis 1200 mg KOH/g zum Einsatz. Besonders bevorzugte Verbindungen sind alle zur Herstellung von Polyurethansystemen, insbesondere Polyurethanschaumstoffen üblicherweise verwendeten Polyetherpolyole und/oder Polyesterpolyole. Polyetherpolyole können vorzugsweise durch Umsetzung von mehrwertigen Alkoholen oder Aminen mit Alkylenoxiden gewonnen werden. Polyesterpolyole basieren vorzugsweise auf Estern mehrwertiger Carbonsäuren (die entweder aliphatisch, beispielsweise Adipinsäure, oder aromatisch, beispielsweise Phthalsäure oder Terephthalsäure, sein können) mit mehrwertigen Alkoholen (vorzugsweise Glykolen).

Zudem können z.B. Polyetherpolycarbonatpolyole, auf natürlichen Ölen basierende Polyole (Natural oil based polyols, NOPs; wie z.B. beschrieben in WO 2005/033167 A2, US 2006/0293400 A1, WO 2006/094227 A2, WO 2004/096882 A1, US 2002/0103091 A1, WO 2006/116456 A1 oder EP 1678232 A2), Füllkörperpolyole, prepolymerbasierte Polyole und/oder Recycling-Polyole eingesetzt werden.

Erfindungsgemäß enthält die Polyol-Komponente mindestens ein Recyclingpolyol, wie oben beschrieben.

Die Polyisocyanat-Komponente besteht aus mindestens einem Polyisocyanat mit zwei oder mehr Isocyanat-Gruppen. Geeignete Polyisocyanate im Sinne dieser Erfindung sind alle organischen Isocyanate mit zwei oder mehr Isocyanat-Gruppen, insbesondere die an sich bekannten aliphatischen, cycloaliphatischen, arylaliphatischen und vorzugsweise aromatischen, mehrwertigen Isocyanate. Beispielhaft genannt werden können hier Alkylendiisocyanate mit 4 bis 12 Kohlenstoffatomen im Alkylenrest, wie 1,12-Dodecandiisocyanat, 2-Ethyl-tetramethylen-1,4-diisocyanat, 2-Methyl-pentamethylen-1,5-diisocyanat, Tetramethylen-1,4-diisocyanat, Pentamethylendiisocyanat (PDI) und vorzugsweise Hexamethylen-1,6-diisocyanat (HMDI), cycloaliphatische Diisocyanate, wie Cyclohexan-1,3- und -1-4-diisocyanat sowie die entsprechenden Isomerengemische, 4,4'-Methylendicyclohexyldiisocyanat (H12MDI), Isophorondiisocyanat (IPDI), 2,4- und 2,6-Methylcyclohexyldiisocyanat sowie die entsprechenden Isomerengemische und vorzugsweise aromatische Di- und Polyisocyanate, wie 2,4- und 2,6-Toluoldiisocyanat (TDI) sowie die entsprechenden Isomerengemische, Naphthylendiisocyanat, Diethyltoluoldiisocyanat, 4,4'- oder 2,2'- oder 2,4'-Diphenylmethandiisocyanat (MDI) und Polymethylene-polyphenyl-polyisocyanate (PMDI, "polymeres MDI"). Die organischen Polyisocyanate können einzeln oder in Form ihrer Mischungen eingesetzt werden. Ebenso können entsprechende "Oligomere" der Diisocyanate eingesetzt werden, wie z.B. das IPDI-Trimer auf Basis des Isocyanurates, Biurete oder Urethdione. Des Weiteren ist der Einsatz von Prepolymeren auf Basis der oben genannten Isocyanate möglich. Besonders geeignet ist das als "polymeres MDI" (auch als "crude MDI" oder "Roh-MDI" bezeichnet) bekannte Gemisch aus MDI und höher kondensierten Analoga mit einer mittleren Funktionalität von 2 bis 4, sowie die verschiedenen Isomere des TDI in reiner Form oder als Isomerengemisch. Es ist auch möglich, Isocyanate einzusetzen, die durch den Einbau von Urethan-, Uretdion-, Isocyanurat-, Allophanat- und anderen Gruppen modifiziert wurden, sogenannte modifizierte Isocyanate. Beispiele für besonders geeignete Isocyanate sind auch z.B. in EP 712578A1, WO 00/47647A1, WO 00/58383 A1, US2007/0072951A1, WO 2005/033167A2 und der WO 2005/085310 aufgeführt, auf die hier in vollem Umfang Bezug genommen wird.

Ein bevorzugtes Verhältnis von Polyisocyanat-Komponente und Polyol-Komponente, ausgedrückt als Index der Formulierung (Isocyanat-Index), d.h. als stöchiometrisches Verhältnis von Isocyanat-Gruppen gegenüber Isocyanat-reaktiven Gruppen (z.B. OH-Gruppen, NH-Gruppen) multipliziert mit 100, liegt im Bereich von 10 bis 1000, bevorzugt 40 bis 400. Ein Index von 100 steht für ein molares Verhältnis der reaktiven Gruppen von 1 zu 1.

Geeignete Katalysatoren, die für die Herstellung von Polyurethanen, insbesondere PU-Schaumstoffen, einsetzbar sind, sind dem Fachmann aus dem Stand der Technik bekannt. Diese können die Reaktionen Isocyanat-Polyol und/oder Isocyanat-Wasser und/oder die Isocyanat-Trimerisierung katalysieren. Im Sinne der vorliegenden Erfindung sind vorzugsweise alle Verbindungen einsetzbar, die in der Lage sind, die Reaktion von Isocyanat-Gruppen mit OH-, NH-, oder anderen Isocyanat-reaktiven Gruppen und/oder die Reaktion von Isocyanat-Gruppen untereinander zu katalysieren. Hierbei kann auf die üblichen aus dem Stand der Technik bekannten Katalysatoren zurückgegriffen werden, wie z.B. Amine (Cyclische, acyclische; Monoamine, Diamine, Oligomere mit einer oder mehreren Aminogruppen), Ammonium-Verbindungen, metallorganische Verbindungen und/oder Metallsalze, vorzugsweise die des Eisen, Bismut, Kalium und/oder Zink. Insbesondere können als Katalysatoren Gemische mehrerer solcher Verbindungen eingesetzt werden. Geeignete Einsatzmengen richten sich nach dem Typ des Katalysators und können z.B. bei Amin-Katalysatoren vorzugsweise im Bereich von 0,05 bis 5 pphp (= Gewichtsteile bezogen auf 100 Gewichtsteile Polyol) oder z.B. bei Kaliumsalzen vorzugsweise im Bereich 0,1 bis 10 pphp liegen.

Es konnte gefunden werden, dass erfindungsgemäße Zusammensetzungen, die wenig oder keine Zinn-basierten Katalysatoren enthalten, sich als besonders vorteilhaft zur Realisierung der erfindungsgemäß angestrebten Ergebnisse erwiesen haben. Es ist daher bevorzugt, wenn Zinnbasierte Katalysatoren in einer Gesamtmenge von weniger als 0,5 Gewichtsteile, vorzugsweise weniger als 0,1 Gewichtsteile, besonders bevorzugt weniger als 0,01 Gewichtsteile, insbesondere bevorzugt von 0,0001 Gewichtsteile bis weniger als 0,01 Gewichtsteile, bezogen auf 100 Gewichtsteile der gesamten Polyol-Komponente, enthalten sind. Gemäß einer dazu alternativen, besonders bevorzugten Ausführungsform der Erfindung enthält die erfindungsgemäße Zusammensetzung keinen Zinn-basierten Katalysator.

Schaumstabilisatoren und deren Einsatz bei der Herstellung von PU-Schaumstoffen sind dem Fachmann wie oben beschrieben bekannt. Die erfindungsgemäß Zusammensetzung enthält mindestens ein Acrylat- und/oder Methacrylat-Copolymer als Schaumstabilisator. Neben den erfindungsgemäßen Schaumstabilisatoren, können vorzugsweise zusätzlich Polyethersiloxan-Schaumstabilisatoren, wie zum Beispiel in CN 103665385 A, CN 103657518 A, CN 103055759 A, CN 103044687 A, US 2008/0125503 A1, US 2015/0057384 A1, EP 1520870 A1, EP 1211279 A1, EP 0867464 A1, EP 0867465 A1 oder EP 0275563 A1 beschrieben, als auch weitere Si-freie Tenside eingesetzt werden. So wird beispielsweise in EP 2295485 A1 die Verwendung von Lecithin und z.B. in US 3746663 die Verwendung von Vinylpyrrolidon-basierten Strukturen beschrieben. Weitere Si-freie Schaumstabilisatoren sind beispielsweise in EP 2511328A2, DE 020011007479 A1, DE 3724716 C1, WO 95/16721 A1, EP 1985642 A1, US 5236961 und der deutschen Offenlegungsschrift DE 2244350 beschrieben.

Treibmittel und deren Einsatz bei der Herstellung von PU-Schaumstoffen sind dem Fachmann bekannt. Die bevorzugte Verwendung von einem oder einer Kombination aus mehreren Treibmitteln ist grundsätzlich abhängig von der Art des Verschäumungsverfahrens, der Art des Systems und der Anwendung des erhaltenen PU-Schaums. Es können sowohl chemische und/oder physikalische Treibmittel, als auch eine Kombination aus beiden verwendet werden. Je nach Menge des verwendeten Treibmittels kann ein Schaumstoff mit hoher oder niedriger Dichte hergestellt werden. So können Schaumstoffe mit Dichten von 5 kg/m³ bis 900 kg/ m³, bevorzugt 5 bis 350 kg/ m³, besonders bevorzugt 8 bis 200 kg/m³, insbesondere 8 bis 150 kg/m³ hergestellt werden.

Als physikalische Treibmittel können z.B. eine oder mehrere der entsprechenden Verbindungen mit passenden Siedepunkten, wie z.B. Kohlenwasserstoffe mit 3, 4 oder 5 Kohlenstoffatomen, bevorzugt cyclo-, iso- oder n-Pentan, Fluorkohlenwasserstoffe (HFC), wie zum Beispiel HFC 245fa, HFC 134a oder HFC 365mfc, Fluorchlorkohlenwasserstoffe (HCFC), wie zum Beispiel HCFC 141b, Hydrofluoroolefine (HFO) oder Hydrohaloolefine, bevorzugt 1234ze, 1234yf, 1224yd, 1233zd(E) oder 1336mzz, Ester, bevorzugt Methylformiat, Ketone, bevorzugt Aceton, Ether, bevorzugt, Dimethoxymethan, oder Chlorkohlenwasserstoffe, wie zum Beispiel Dichlormethan oder 1,2-Dichlorethan, sowie deren Mischungen eingesetzt werden.

Als chemische Treibmittel können z.B. eine oder mehrere Verbindungen eingesetzt werden, die entweder mit NCO-Gruppen unter Freisetzung von Gasen reagieren, wie z.B. Wasser oder Ameisensäure, oder durch den Temperaturanstieg während der Reaktion Gase freisetzen wie z.B. Natriumhydrogencarbonat.

Als optionale Zusatzstoffe können z.B. eine oder mehrere der nach dem Stand der Technik bekannten Substanzen verwendet werden, die bei der Herstellung von Polyurethanen, insbesondere von PU-Schaumstoffen, Verwendung finden, wie zum Beispiel Vernetzer, Kettenverlängerer, Stabilisatoren gegen oxidativen Abbau (sogenannte Antioxidantien), Flammschutzmittel, Biozide, zellverfeinernde Additive, Nukleierungsmittel, Zellöffner, feste Füllstoffe, Antistatik-Additive, Verdicker, Farbstoffe, Pigmente, Farbpasten, Duftstoffe und/oder Emulgatoren, usw.

Als optionales Flammschutzmittel kann die erfindungsgemäße Zusammensetzung z.B. eines oder mehrere der bekannten und zur Herstellung von PU-Schaumstoffen geeigneten Flammschutzmittel, wie beispielsweise halogenhaltige oder halogenfreie organische phosphorhaltige Verbindungen, wie z.B. Triethylphosphat (TEP), Tris(1-chlor-2-propyl)phosphat (TCPP), Tris(2-chlorethyl)phosphat (TCEP), Dimethylmethanphosphonat (DMMP), Dimethylpropanphosphonat (DMPP), Ammoniumpolyphosphat oder roter Phosphor, stickstoffhaltige Verbindungen, wie z.B. Melamin, Melamincyanurat oder Melaminpolyphosphat, oder halogenierte Verbindungen, wie z.B. chlorierte und/oder bromierte Polyether- und/oder Polyester-Polyole, enthalten. Es können auch Mischungen von verschiedenen Flammschutzmitteln eingesetzt werden.

Wenn aus dieser Beschreibung nichts anderes hervorgeht, dann kann jegliche bevorzugte oder besonders bevorzugte Ausführungsform der Erfindung mit einer oder mehreren der übrigen bevorzugten oder besonders bevorzugten Ausführungsformen der Erfindung kombiniert werden.

Sind Bereiche, allgemeine Formeln oder Verbindungsklassen angegeben, so sollen diese nicht nur die entsprechenden Bereiche oder Gruppen von Verbindungen umfassen, die explizit erwähnt sind, sondern auch alle Teilbereiche und Teilgruppen von Verbindungen, die durch Herausnahme von einzelnen Werten (Bereichen) oder Verbindungen erhalten werden können. Werden im Rahmen der vorliegenden Beschreibung Dokumente zitiert, so soll deren Inhalt, insbesondere in Bezug auf den Sachverhalt, in dessen Zusammenhang das Dokument zitiert wurde, vollständig zum Offenbarungsgehalt der vorliegenden Erfindung gehören. Bei Prozentangaben handelt es sich, wenn nicht anders angegeben, um Angaben in Gewichtsprozent. Werden Mittelwerte angegeben, so handelt es sich, wenn nicht anders angegeben, um Zahlenmittel. Werden Parameter angegeben, die durch Messung bestimmt wurden, so wurden die Messungen, wenn nicht anders angegeben, bei einer Temperatur von 23 °C und vorzugsweise bei einem Druck von 101325 Pa (Normaldruck) durchgeführt.

Die folgenden Beispiele dienen allein zur weiteren Erläuterung der vorliegenden Erfindung und stellen keinerlei Beschränkung der vorliegenden Erfindung dar.

### Beispiele:

### Synthese der Schaumstabilisatoren: Verbindung A bis G

### Verbindung A:

In einem 500 mL-Vierhalskolben mit Rückflusskühler und N₂-Leitung, Säbelrührer (200 Upm) und Pt100-Digital-Innenthermometer wurden 30,01 g n-Butylacetat vorgelegt und das Ölbad auf 145 °C erhitzt. Eine Mischung aus 9,2 g TBPEH (tert.-Butyl-peroxy-2-ethylhexanoat), 56,18 g Isobutylmethacrylat (i-BMA), 67,29 g MPEG500-Methacrylat (MPEG500MA, ethoxyliertes Methacrylat) und 2,21 g 2-Mercaptoethanol wurde über einen Zeitraum von 4 h mit einer Schlauchpumpe zudosiert. Die Mischung wurde für weitere 30 min bei dieser Temperatur gerührt. Es wurde auf 80 °C abgekühlt, 0,13 g TBPEH gelöst in 10 g n-Butylacetat wurden zur Nachreaktion zudosiert und 2 h bei 80 °C nachgerührt. Weitere 5 g n-Butylacetat wurden zugegeben und es wurde 30 min ohne Heizen weiter gerührt.

GPC nach DIN 55672-1 (Eluent: THF; Standard: Polystyrol): Mw=7714 g/mol; Mn=2862 g/mol; PDI=2,7.

### Verbindung B:

In einem 500 mL-Vierhalskolben, mit Rückflusskühler und N₂-Leitung, Tropftrichter, KPG-Rührer (200 Upm) und Pt100-Digital-Innenthermometer wurden 30,01 g n-Butylacetat vorgelegt und das Ölbad auf 145°C erhitzt. Eine Mischung aus 9,8 g APO (tert-Amyl-peroxy-2-ethylhexanoat), 55,99 g i-BMA, 67,06 g MPEG500MA und 2,21 g 2-Mercaptoethanol wurde über einen Zeitraum von 4 h mit einer Schlauchpumpe zudosiert. Die Mischung wurde für weitere 30 min bei dieser Temperatur gerührt. Es wurde auf 80 °C abgekühlt, 0,14 g TBPEH gelöst in 10 g n-Butylacetat wurden zur Nachreaktion zudosiert und 2 h bei 80 °C nachgerührt. Weitere 5 g n-Butylacetat wurden zugegeben und es wurde 30 min ohne Heizen weiter gerührt.

GPC nach DIN 55672-1 (Eluent: THF; Standard: Polystyrol): Mw=5528 g/mol; Mn=2370 g/mol; PDI=2,3.

### Verbindung C:

In einem 500 mL-Vierhalskolben mit Rückflusskühler und N₂-Leitung, Säbelrührer (200 Upm) und Pt100-Digital-Innenthermometer wurden 30,01 g n-Butylacetat vorgelegt und das Ölbad auf 145 °C erhitzt. Eine Mischung aus 9,2 g TBPEH, 54,69 g Isodecylmethacrylat (IDMA), 68,77 g MPEG500MA und 2,21 g 2-Mercaptoethanol wurden über einen Zeitraum von 4 h mit einer Schlauchpumpe zudosiert. Die Mischung wurde für weitere 30 min bei dieser Temperatur gerührt. Es wurde auf 80°C abgekühlt, 0,13 g TBPEH gelöst in 10 g n-Butylacetat wurden zur Nachreaktion zudosiert und 2 h bei 80 °C nachgerührt. Weitere 5 g n-Butylacetat wurden zugegeben und es wurde 30 min ohne Heizen weiter gerührt.

GPC nach DIN 55672-1 (Eluent: THF; Standard: Polystyrol): Mw=8452 g/mol; Mn=2783 g/mol; PDI=3,0.

### Verbindung D:

In einem 500 mL-Vierhalskolben mit Rückflusskühler und N₂-Leitung, Säbelrührer (200 Upm) und Pt100-Digital-Innenthermometer wurden 30,00 g n-Butylacetat vorgelegt und das Ölbad auf 145 °C erhitzt. Eine Mischung aus 4,54 g TBPEH, 55,35 g Isodecylmethacrylat (IDMA), 72,77 g MPEG500MA und 2,21 g 2-Mercaptoethanol wurden über einen Zeitraum von 4 h mit einer Schlauchpumpe zudosiert. Die Mischung wurde für weitere 30 min bei dieser Temperatur gerührt. Es wurde auf 80°C abgekühlt, 0,13 g TBPEH gelöst in 10 g n-Butylacetat wurden zur Nachreaktion zudosiert und 2 h bei 80 °C nachgerührt. Weitere 5 g n-Butylacetat wurden zugegeben und es wurde 30 min ohne Heizen weiter gerührt.

GPC nach DIN 55672-1 (Eluent: THF; Standard: Polystyrol): Mw=11340 g/mol; Mn=2684 g/mol; PDI=5,1.

### Verbindung E:

In einem 500 mL-Vierhalskolben mit Rückflusskühler und N₂-Leitung, Säbelrührer (200 Upm) und Pt100-Digital-Innenthermometer wurden 30,00 g n-Butylacetat vorgelegt und das Ölbad auf 145 °C erhitzt. Eine Mischung aus 9,2 g TBPEH, 88,40 g Isobutylmethacrylat (i-BMA), 35,06 g MPEG500MA und 2,21 g 2-Mercaptoethanol wurden über einen Zeitraum von 4 h mit einer Schlauchpumpe zudosiert. Die Mischung wurde für weitere 30 min bei dieser Temperatur gerührt. Es wurde auf 80°C abgekühlt, 0,13 g TBPEH gelöst in 10 g n-Butylacetat wurden zur Nachreaktion zudosiert und 2 h bei 80 °C nachgerührt. Weitere 5 g n-Butylacetat wurden zugegeben und es wurde 30 min ohne Heizen weiter gerührt.

GPC nach DIN 55672-1 (Eluent: THF; Standard: Polystyrol): Mw=6486 g/mol; Mn=2666 g/mol; PDI=2,4.

### Verbindung F:

In einem 500 mL-Vierhalskolben mit Rückflusskühler und N₂-Leitung, Säbelrührer (200 Upm) und Pt100-Digital-Innenthermometer wurden 90,01 g n-Butylacetat vorgelegt und das Ölbad auf 145 °C erhitzt. Eine Mischung aus 9,2 g TBPEH, 53,33 g Isodecylmethacrylat (IDMA), 70,13 g MPEG500MA und 2,21 g 2-Mercaptoethanol wurden über einen Zeitraum von 4 h mit einer Schlauchpumpe zudosiert. Die Mischung wurde für weitere 30 min bei dieser Temperatur gerührt. Es wurde auf 80°C abgekühlt, 0,13 g TBPEH gelöst in 10 g n-Butylacetat wurden zur Nachreaktion zudosiert und 2 h bei 80 °C nachgerührt. Weitere 35 g n-Butylacetat wurden zugegeben und es wurde 30 min ohne Heizen weiter gerührt.

GPC nach DIN 55672-1 (Eluent: THF; Standard: Polystyrol): Mw=5616 g/mol; Mn=2017 g/mol; PDI=2,8.

### Verbindung G:

In einem 500 mL-Vierhalskolben mit Rückflusskühler und N₂-Leitung, Säbelrührer (200 Upm) und Pt100-Digital-Innenthermometer wurden 29,97 g n-Butylacetat vorgelegt und das Ölbad auf 145 °C erhitzt. Eine Mischung aus 9,2 g TBPEH, 95,41 g Isobutylmethacrylat (i-BMA), 28,50 g MPEG500MA, 9,02 g Methylmethacrylat (MMA) und 2,21 g 2-Mercaptoethanol wurden über einen Zeitraum von 4 h mit einer Schlauchpumpe zudosiert. Die Mischung wurde für weitere 30 min bei dieser Temperatur gerührt. Es wurde auf 80°C abgekühlt, 0,13 g TBPEH gelöst in 10 g n-Butylacetat wurden zur Nachreaktion zudosiert und 2 h bei 80 °C nachgerührt. Weitere 8 g n-Butylacetat wurden zugegeben und es wurde 30 min ohne Heizen weiter gerührt.

GPC nach DIN 55672-1 (Eluent: THF; Standard: Polystyrol): Mw=6648 g/mol; Mn=2830 g/mol; PDI=2,3.

### Recycling-Polyole 1 und 2

Recycling-Polyol 1 wurde durch Glykolyse, gemäß einer Vorschrift von H&S Anlagentechnik aus dem Jahr 2012 hergestellt: https://www.dbu.de/OPAC/ab/DBU-Abschlussbericht-AZ-29395.pdf. Dazu wurde ein Reaktor der Firma Parr (Parr Instrumental Company) ausgestattet mit einem Glas-Innenbehälter und einem mechanischen Rührer mit 294,0 g komprimierten PU-Schaumstücken (ca. 1 cm x 1 cm) befüllt. Der für die Glykolyse verwendete Polyurethanschaum wurde, wie unten beschrieben, entsprechend Rezeptur I aus Tabelle 2 mit TEGOSTAB^{®} B 8462 der Firma Evonik Operations GmbH als Schaumstabilisator hergestellt. Dann wurden 152,3 g des Polyols Daltolac^{®} R 471, 75,1 g Phthalsäure und 11,6 g wässrige Wasserstoffperoxid Lösung (30 Gew.-% in Wasser) zu den Schaumstücken hinzugefügt. Das Reaktionsgemisch wurde auf 250 °C erhitzt und für 5 h innerhalb eines Temperaturbereichs von 237 °C bis 256 °C gehalten. Nach Ablauf der Reaktionszeit wurde die Beheizung abgestellt, und bei Erreichen einer Reaktionstemperatur von 160 °C wurde unter Stickstoffgegenstrom eine zweite Portion von 144,6 g Daltolac^{®} R 471 hinzugegeben. Die flüssige Reaktionsmischung wurde auf Raumtemperatur abgekühlt und nach Abdekantieren als Recycling-Polyol 1 verwendet. Der Recycling-Prozess wurde wiederholt angewandt, um eine ausreichend große Menge Recycling-Polyol für die Verschäumungsexperimente bereit zu stellen.

Recycling-Polyol 2 wurde analog zu Recycling-Polyol 1 hergestellt. Statt frisch hergestelltem Schaum wurden Schaumstücke aus gebrauchten PU-Dämmplatten basierend auf PolyetherPolyolen verwendet.

### Polyurethanschaum

Für den anwendungstechnischen Vergleich wurden die in Tabelle 2 dargestellten Formulierungen verwendet. Die Durchführung der Vergleichsverschäumungen erfolgte im Handmischverfahren. Dazu wurden Polyol, Katalysatoren, Wasser, Schaumstabilisator, Treibmittel und ggf. weitere Additive in einen Becher eingewogen und mit einem Tellerrührer (6 cm Durchmesser) für 30 s bei 1000 Upm vermischt. Durch erneutes Wiegen wurde die beim Mischvorgang verdunstete Treibmittelmenge bestimmt und wieder ergänzt. Jetzt wurde das MDI zugegeben, die Reaktionsmischung mit dem beschriebenen Rührer 5 s bei 3000 Upm verrührt und sofort in eine auf 45 °C thermostatisierte Aluminiumform von 145 cm x 14 cm x 3,5 cm Größe überführt, welche im Winkel von 10° (entlang der 145 cm messenden Seite) geneigt und mit Polyethylenfolie ausgekleidet war. Die Schaumformulierung wurde dabei an der tiefer liegenden Seite eingetragen, so dass der expandierende Schaum die Form im Eingussbereich ausfüllt und in Richtung der höher liegenden Seite aufsteigt. Die Einsatzmenge der Schaumformulierung wurde so bemessen, dass sie ca. 10 % über der zur Mindestbefüllung der Form notwendigen Menge (ca. 300 g) lag. Nach 10 min wurden die Schaumstoffe entformt. Einen Tag nach der Verschäumung wurden die Schaumstoffe analysiert. Oberflächenqualität und Innenstörungen wurden subjektiv anhand einer Skala von 1 bis 10 beurteilt, wobei 10 einem (idealisierten) ungestörten Schaum und 1 einen extrem stark gestörten Schaum repräsentiert. Die Wärmeleitzahl (λ-Wert in mW/m K) wurde an 2,5 cm dicken Scheiben mit einem Gerät vom Typ Hesto Lambda Control, Modell HLC X206 bei einer mittleren Temperatur von 10 °C entsprechend den Vorgaben der Norm EN12667:2001 gemessen. Die Ergebnisse wurden mit TEGOSTAB^{®} B 8499 der Firma Evonik Operations GmbH als nicht erfindungsgemäßen Schaumstabilisator vergleichen.

**Tabelle 2: PU Formulierungen. Mengenangaben in Gewichtsteilen**

| **Komponente** | **Rezeptur I** | **Rezeptur II** | **Rezeptur III** | **Rezeptur IV** | **Rezeptur V** |
|---|---|---|---|---|---|
| Polyether-Polyol* | 100 | 65 | 50 | 65 | 50 |
| Recycling-Polyol 1 | | 35 | 50 | | |
| Recycling-Polyol 2 | | | | 35 | 50 |
| DABCO^{®} BL 11 ** | 0,8 | 0,8 | 0,8 | 0,8 | 0,8 |
| POLYCAT^{®} 9** | 3,5 | 3,5 | 3,5 | 3,5 | 3,5 |
| DABCO^{®} TMR 30** | 0,5 | 0,5 | 0,5 | 0,5 | 0,5 |
| Schaumstabilisator | 3,0 | 3,0 | 3,0 | 3,0 | 3,0 |
| Wasser | 2,0 | 2,0 | 2,0 | 2,0 | 2,0 |
| Cyclopentan | 14 | 14 | 14 | 14 | 14 |
| MDI*** | 173 | 171 | 170 | 163 | 161 |

| | | | | | |
|---|---|---|---|---|---|
| *Daltolac^{®} R 471 der Firma Huntsman, OH-Zahl 470 mg KOH/g **Aminkatalysatoren der Firma Evonik Operations GmbH ***Polymeres MDI, 200 mPa·s, 31,5% NCO, Funktionalität 2,7. | | | | | |

Die Ergebnisse sind in Tabelle 3 dargestellt.

**Tabelle 3: Schaumeigenschaften**

| **Rezeptur** | **Schaumstabilisator** | **Dichte (kg/m³)** | **λ-Wert (mW/m·K)** | **Oberfläche Oberseite** | **Oberfläche Unterseite** | **Innenstörungen** |
|---|---|---|---|---|---|---|
| I | B 8499 | 34,4 | 21,7 | 7,0 | 7,0 | 7,5 |
| I | A | 35,0 | 21,8 | 6,5 | 6,5 | 7,5 |
| I | B | 34,8 | 22,2 | 6,5 | 6,5 | 7,0 |
| I | C | 34,2 | 21,6 | 6,5 | 7,0 | 7,0 |
| I | D | 34,5 | 21,4 | 7,0 | 7,0 | 7,0 |
| I | E | 34,1 | 21,7 | 7,0 | 6,5 | 7,5 |
| I | F | 34,8 | 21,4 | 7,5 | 7,0 | 7,0 |
| I | G | 34,5 | 21,6 | 7,0 | 7,0 | 7,0 |
| II | B 8499 | 35,2 | 23,1 | 6,5 | 6,5 | 7,0 |
| II | A* | 36,0 | 22,6 | 6,0 | 6,0 | 6,5 |
| II | B* | 35,9 | 22,1 | 6,5 | 6,0 | 6,5 |
| II | C* | 35,1 | 22,4 | 6,5 | 6,5 | 7,0 |
| II | D* | 35,5 | 21,9 | 7,0 | 6,5 | 7,0 |
| II | E* | 35,0 | 21,8 | 7,0 | 7,0 | 7,0 |
| II | F* | 35,7 | 22,0 | 6,5 | 6,5 | 7,0 |
| II | G* | 36,0 | 22,4 | 7,0 | 6,5 | 7,0 |
| III | B 8499 | 35,8 | 23,6 | 5,5 | 5,0 | 6,0 |
| III | A* | 36,3 | 22,1 | 6,0 | 5,5 | 6,5 |
| III | B* | 36,2 | 22,4 | 6,0 | 5,5 | 6,5 |
| III | C* | 35,8 | 21,7 | 6,5 | 5,5 | 6,5 |
| III | D* | 35,4 | 22,8 | 6,5 | 6,0 | 7,0 |
| III | E* | 36,0 | 21,9 | 6,5 | 6,5 | 7,0 |
| III | F* | 36,2 | 21,9 | 6,5 | 6,5 | 7,0 |
| III | G* | 36,1 | 22,0 | 6,0 | 6,5 | 7,0 |
| IV | B 8499 | 34,9 | 24,4 | 6,0 | 6,5 | 6,5 |
| IV | A* | 35,5 | 23,0 | 6,0 | 6,5 | 6,5 |
| IV | B* | 35,4 | 23,9 | 6,0 | 6,5 | 6,5 |
| IV | C* | 34,6 | 23,7 | 6,5 | 7,0 | 6,0 |
| IV | D* | 34,2 | 23,1 | 6,5 | 7,0 | 7,0 |
| IV | E* | 35,8 | 23,4 | 6,5 | 7,0 | 7,0 |
| IV | F* | 35,3 | 22,9 | 7,0 | 7,5 | 7,5 |
| IV | G* | 3,54 | 23,3 | 7,0 | 7,5 | 7,0 |
| V | B 8499 | 36,3 | 23,9 | 5,5 | 5,5 | 5,5 |
| V | A* | 36,8 | 23,7 | 6,0 | 6,0 | 6,0 |
| V | B* | 37,2 | 23,5 | 6,0 | 6,0 | 6,5 |
| V | C* | 35,8 | 23,4 | 6,5 | 6,5 | 7,0 |
| V | D* | 35,4 | 23,4 | 6,5 | 6,5 | 6,5 |
| V | E* | 35,9 | 22,0 | 6,0 | 7,0 | 7,0 |
| V | F* | 36,2 | 21,9 | 7,0 | 7,0 | 7,5 |
| V | G* | 36,4 | 22,8 | 7,0 | 7,0 | 6,5 |

| | | | | | | |
|---|---|---|---|---|---|---|
| *erfindungsgemäße Zusammensetzung | | | | | | |

Die Ergebnisse zeigen, dass die als Schaumstabilisatoren eingesetzten Acrylat- und/oder Methacrylat-Copolymere nicht nur in herkömmlichen Polyurethanformulierungen vergleichbare Ergebnisse wie die Polyether-modifizierten Siloxanen zeigen, sondern auch bei Einsatz von Recycling-Polyolen zu gebrauchsfähigen Schaumqualitäten und Wärmeleitfähigkeiten führen, die auf dem gleichen Niveau wie von Polyurethanformulierungen ohne Recycling-Polyol liegen. Alle anderen für den Gebrauch relevanten Schaumeigenschaften werden durch die erfindungsgemäßen Schaumstabilisatoren nicht oder nur unwesentlich beeinflusst.

## Patentansprüche

1. Zusammensetzung zur Herstellung von Polyurethanschaumstoff, vorzugsweise Polyurethanhartschaumstoff, umfassend
- eine Polyol-Komponente, umfassend mindestens ein Recycling-Polyol,
- eine Polyisocyanat-Komponente,
- mindestens einen Katalysator, der die Reaktionen Isocyanat-Polyol und/oder Isocyanat-Wasser und/oder die Isocyanat-Trimerisierung katalysiert,
- mindestens ein Treibmittel,
**dadurch gekennzeichnet, dass** die Zusammensetzung zusätzlich mindestens ein Acrylat- und/oder Methacrylat-Copolymer als Schaumstabilisator enthält, wobei das mindestens eine Acrylat- und/oder Methacrylat-Copolymer in einer Gesamtmenge von 0,1 bis 20 Gewichtsteile, vorzugsweise 0,5 bis 10 Gewichtsteile, besonders bevorzugt 0,5 bis 8 Gewichtsteile bezogen auf 100 Gewichtsteile der gesamten Polyol-Komponente, enthalten ist.

2. Zusammensetzung gemäß Anspruch 1, **dadurch gekennzeichnet, dass** das mindestens eine Treibmittel ausgewählt ist aus der Gruppe bestehend aus
- Kohlenwasserstoffen mit 3, 4 oder 5 Kohlenstoff-Atomen, bevorzugt cyclo-, iso- und/oder n-Pentan,
- Hydrofluoroolefine und/oder Hydrohaloolefine, bevorzugt 1234ze, 1234yf, 1224yd, 1233zd(E) und/oder 1336mzz,
und
- sauerstoffhaltige Treibmittel, bevorzugt Ameisensäuremethylester, Aceton und/oder Dimethoxymethan.

3. Zusammensetzung nach einem der Ansprüche 1 oder 2, **dadurch gekennzeichnet, dass** das mindestens eine Acrylat- und/oder Methacrylat-Copolymer mindestens ein Co-Monomer des Typs H₂C=CR¹-COOR² und mindestens ein Co-Monomer des Typs H₂C=CR¹-COOR³, enthält, wobei
R¹ = jeweils unabhängig voneinander H oder Methyl, wobei innerhalb eines Moleküls verschiedene Co-Monomere mit untereinander verschiedenen Substituenten R¹ vorliegen können,
R² = jeweils unabhängig voneinander ein Rest aus der Gruppe aliphatischer oder aromatischer Kohlenwasserstoffe mit 1 bis 25 C-Atomen, vorzugsweise Methyl, Ethyl, n-Butyl, i-Butyl, t-Butyl, 2-Ethylhexyl, Isodecyl, Cyclohexyl, Benzyl, Phenyl, Isobornyl oder Allyl, wobei innerhalb eines Moleküls verschiedene Co-Monomere mit untereinander verschiedenen Substituenten R² vorliegen können,
R³ = jeweils unabhängig voneinander ein Polyether-Rest nach Formel 1, wobei innerhalb eines Moleküls verschiedene Co-Monomere mit untereinander verschiedenen Substituenten R³ vorliegen können, 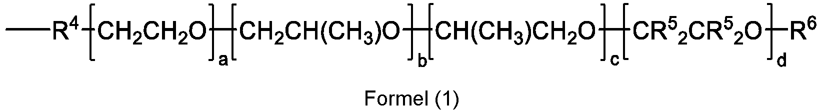
mit R⁴ = jeweils unabhängig voneinander -CH₂-O-, -CH₂-CH₂-O-, -CH₂-CH₂-CH₂-O-, -CH₂-CH₂-CH₂-CH₂-O- oder -CH₂-CH₂- CH₂-CH₂-CH₂-O-, wobei R⁴ auch entfallen kann,
R⁵ = jeweils unabhängig voneinander gleiche oder verschiedene Alkylreste mit 1 bis 18 Kohlenstoffatomen, die optional Etherfunktionen besitzen, oder gleiche oder verschiedene Arylreste mit 6 bis 18 Kohlenstoffatomen, die optional Etherfunktionen besitzen, oder H, bevorzugt H, Methyl, Ethyl oder Benzyl,
R⁶ = jeweils unabhängig voneinander gleiche oder verschiedene Reste ausgewählt aus der Gruppe bestehend aus R⁷, -C(O)R⁷, -CH₂-CH(OH)-CH₂OH und -CH₂-C(CH₂OH)₂-CH₂-CH₃, wobei H, Methyl, Ethyl, Propyl, Butyl und/oder C(O)Me besonders bevorzugt sind,
R⁷ = jeweils unabhängig voneinander gleiche oder verschiedene aliphatische Kohlenwasserstoffe mit 1 bis 25 Kohlenstoffatomen, gleiche oder verschiedene Arylreste mit 6 bis 16 Kohlenstoffatomen oder H,
a = 0 bis 300, bevorzugt 0 bis 100, besonders bevorzugt 0 bis 80,
b = 0 bis 300, bevorzugt 0 bis 100, besonders bevorzugt 0 bis 80,
c = 0 bis 300, bevorzugt 0 bis 100, besonders bevorzugt 0 bis 80,
d = 0 bis 300, bevorzugt 0 bis 100, besonders bevorzugt 0,
wobei a+b+c+d = 2 bis 500, vorzugsweise > 5 bis 300 und besonders bevorzugt 8 bis 100.

4. Zusammensetzung nach einem der Ansprüche 1 bis 3, **dadurch gekennzeichnet, dass** das mindestens eine Acrylat- und/oder Methacrylat-Copolymer ein mittels Gelpermeationschromatographie nach DIN 55672-1:2016-03 (Eluent: Tetrahydrofuran; Standard: Polystyrol) ermitteltes gewichtsgemitteltes Molekulargewicht M_{w} im Bereich von 500 bis 100.000 g/mol, bevorzugt 1.000 bis 20.000 g /mol, besonders bevorzugt 1.000 bis 15.000 g/mol aufweist.

5. Zusammensetzung nach einem der Ansprüche 1 bis 4, **dadurch gekennzeichnet, dass** das mindestens eine Recycling-Polyol in einer Gesamtmenge von mindestens 10 Gewichtsteilen, vorzugsweise mehr als 20 Gewichtsteilen, besonders bevorzugt mehr als 30 Gewichtsteilen, bezogen auf 100 Gewichtsteile der gesamten Polyol-Komponente eingesetzt wird.

6. Zusammensetzung nach einem der Ansprüche 1 bis 5, **dadurch gekennzeichnet, dass** das eingesetzte Recycling-Polyol durch Depolymerisation von Polyurethan, vorzugsweise Depolymerisation von Polyurethan durch Hydrolyse, Solvolyse, Aminolyse, Acidolyse, Alkoholyse oder Glykolyse, bevorzugt Glykolyse, Hydrolyse oder Aminolyse, besonders bevorzugt Glykolyse erhalten wurde, wobei auch verschiedene Recycling-Polyole aus unterschiedlichen Depolymerisationsverfahren eingesetzt werden können.

7. Zusammensetzung nach einem der Ansprüche 1 bis 6, **dadurch gekennzeichnet, dass** das eingesetzte Recycling-Polyol durch Depolymerisation von Polyurethan-Schaumstoff, bevorzugt Polyurethan-Hartschaumstoff, besonders bevorzugt Polyether- und/oder Polyester-Polyol enthaltenden Polyurethan-Hartschaumstoff vorzugsweise nach einem in Anspruch 6 genannten Verfahren, besonders bevorzugt Glykolyse, erhalten wird.

8. Zusammensetzung nach einem der Ansprüche 1 bis 7, **dadurch gekennzeichnet, dass** das eingesetzte Recycling-Polyol aus einem PU-Abfallschaumstoff erhalten wird.

9. Zusammensetzung nach einem der Ansprüche 1 bis 8, **dadurch gekennzeichnet, dass** das mindestens eine Acrylat- und/oder Methacrylat-Copolymer mit tert.-Butyl-peroxy-2-ethylhexa-noat und/oder tert-Amyl-peroxy-2-ethylhexanoat als Initiator hergestellt wurde.

10. Zusammensetzung nach einem der Ansprüche 1 bis 9, **dadurch gekennzeichnet, dass** der Restmonomergehalt <1 Gew.-% bezogen auf das insgesamt enthaltene mindestens eine Acrylat- und/oder Methacrylat-Copolymer beträgt.

11. Zusammensetzung nach einem der Ansprüche 1 bis 10, **dadurch gekennzeichnet, dass** mindestens ein Zinn-haltiger Katalysator enthalten ist, vorzugsweise in einer Gesamtmenge von weniger als 0,5 Gewichtsteile, bevorzugt weniger als 0,1 Gewichtsteile, besonders bevorzugt weniger als 0,01 Gewichtsteile, insbesondere bevorzugt von 0,0001 Gewichtsteile bis weniger als 0,01 Gewichtsteile, bezogen auf 100 Gewichtsteile der gesamten Polyol-Komponente.

12. Zusammensetzung nach einem der Ansprüche 1 bis 10, **dadurch gekennzeichnet, dass** kein Zinn-haltiger Katalysator enthalten ist.

13. Verfahren zur Herstellung von PU-Schaumstoff, vorzugsweise Polyurethanhartschaumstoff, unter Umsetzung einer Polyol-Komponente mit einer Polyisocyanat-Komponente, **dadurch gekennzeichnet, dass** die Umsetzung unter Einsatz einer Zusammensetzung nach einem der Ansprüche 1 bis 12 erfolgt.

14. PU-Schaumstoff, insbesondere PU-Hartschaumstoff, hergestellt gemäß dem Verfahren nach Anspruch 13.

15. Verwendung von PU-Schaumstoff, vorzugsweise PU-Hartschaumstoff, gemäß Anspruch 14 als Dämmstoff und/oder als Konstruktionswerkstoff, insbesondere in Bauanwendungen, insbesondere im Sprühschaum und/oder, 1- & 1,5-Komponenten-Dosenschaum oder im Kühlbereich, als Schallabsorptionsmaterial, als Verpackungsschaum, als Holzimitat, als Modellschaum, als Dachhimmel für Automobile, als Automobil-Innenverkleidung, als Dichtschaum oder Rohrummantelungen für Röhren.
